# EUROPEAN PATENT APPLICATION

(11) **EP 2 838 015 A1**
(43) Date of publication of application: **18.02.2015**
(21) Application number: 14179820.7
(22) Date of filing: 05.08.2014
(51) Int. Cl.: G06F 9/44, G05B 19/042, G05B 19/05

(54) **Dependency tool for use in graphical programming**

(30) Priority: 13.08.2013 EP 13180278
(71) Applicant: Danfoss Power Solutions GmbH & Co. OHG, 24539 Neumünster (DE)
(72) Inventor: Nilsson, Nils Göran, 34395 Älmhult (SE); Svensson, Claes-Göran Peter, 34337 Älmhult (SE); Karlsson, Johan Kristoffer, 34332 Älmhult (SE); Björn, Lars Fredrik, 35240 Växjö (SE)
(74) Representative: Nestler, Jan Hendrik

(57) **Abstract**

A method and tool for indicating dependency in a graphical program or a dataflow diagram is provided. The method comprises determining nodes that are affected by a selected node of a graphical program or a dataflow diagram and determining nodes that affect the selected node. Dependency data relating to the selected node is displayed to a user by indicating the nodes that are affected by the selected node and/or the nodes that affect the selected node. By using the tool, the a user can navigate through the graphical program or the dataflow diagram to find where there are signals, nodes or modules that are dependent in some way on the selected signal.

## Description

### FIELD OF THE INVENTION

The present invention relates to a tool for use in graphical programming or similar applications (such as dataflow diagrams).

### BACKGROUND OF THE INVENTION

Graphical programming is a method of developing computer programs using primarily graphical tools, rather than primarily (or entirely) text-based tools. Text-based programming typically requires considerable expertise: the increased usage of graphical programming has made it easier for users with moderate experience to generate useful computer code.

As well as making it easier for programmers to create computer code, graphical programs can be easier for end users (especially end users with low-to-moderate programming experience) to engage with. This is largely because graphical representations are typically more user-friendly and intuitive.

Graphical programs enable a user to view a program and to follow the flow of a signal through the code in a manner that many users find easier than interacting with text-based code. This makes it easier for many users to detect coding problems such as mis-wiring or redundant code.

Graphical programming can be of assistance when generating safety-critical software. An issue here is the separation between different parts of the computer code. It is a requirement in safety standards like IEC 61508 to have clear separation between functions and to be able to show code independence. Interdependence between two apparently separate software modules can sometimes be easier to spot when the code is graphical, rather than text-based. Nevertheless, there remains a need for a more systematic method of determining the existence of interdependencies.

The present invention seeks to address at least some of the problems outlined above.

### SUMMARY OF THE INVENTION

The present invention provides a method of indicating dependency in a graphical program or a dataflow diagram, the method comprising: determining nodes that are affected by a selected node of a graphical program or a dataflow diagram; determining nodes that affect the selected node; and displaying dependency data relating to the selected node by indicating the nodes that are affected by the selected node and/or the nodes that affect the selected node.

The present invention also provides an apparatus (e.g. at tool) adapted to: determine nodes that are affected by a selected node of a graphical program or a dataflow diagram; determine nodes that affect the selected node; and display dependency data relating to the selected node by indicating the nodes that are affected by the selected node and/or the nodes that affect the selected node.

The present invention further provides a computer program comprising: code (or some other means) for determining nodes that are affected by a selected node of a graphical program or a dataflow diagram; code (or some other means) for determining nodes that affect the selected node; and code (or some other means) for displaying dependency data relating to the selected node by indicating the nodes that are affected by the selected node and/or the nodes that affect the selected node. The computer program may be a computer program product comprising a computer-readable medium bearing computer program code embodied therein for use with a computer.

Thus, the present invention provides a tool in which a signal or a node in a graphical program or a dataflow diagram can be selected. The graphical program or dataflow diagram can be displayed to demonstrate the nodes that are affected by the selected node, affect the selected node, or both. A user can navigate through the graphical program or the dataflow diagram to find where there are signals, nodes or modules that are dependent in some way on the selection. In one exemplary use of the invention, a user can demonstrate that safety critical and non-safety critical functions of a program are independent of one another.

If, within the context of this application, reference is made to a dependency in a graphical program, a data flow diagram or between nodes, this usually relates to a dependency with respect to data that is received by a certain node from another node and/or sent to another node by a certain node (made it be directly or through several "intermediary nodes"). In other words, if a (first) node affects another (second, third, fourth and so on, wherein the following only "second" will be used for brevity) node, this will usually mean that the first node, affecting the second node will transfer some data to the second node (where the numbering "first", "second" and so on is not meant to imply any hierarchy or the like, but is simply intended for distinguishing the respective nodes). Consequently, if a (first) node is affected by another (second) node, this will usually mean that the first node will obtain data from the second node. The data can be of essentially any type (including a plurality of data words and/or different type of data). The data can be, for example and without limitation, measurement values, variables of any type, user inputs, (instructing) commands, (binary) flags or the like. A "dependency data" can be, in particular and without any limitation, a flag, determining whether a dependency exists or not (binary flag). However, it is also possible that a 'weighted flag' is used (where the weighting can be represented by a numerical value)for indicating the difference between dependant nodes, that difference being quantified by the relationship level of dependence, and quantifying the strength of the relational dependency. As an example, such a value could express whether two nodes are directly depending on each other (for example by means of a direct data line), or whether one or even more nodes are in between (where the numerical value assigned can vary with the number of nodes in between). Also, it is possible to use a numerical value for determining whether a dependency exists with only one neighbouring node or a plurality (two or even more) of neighbouring nodes. The respective value can be a single number. However, two or even more values can be used. In particular, the numerical value can express whether two nodes depend on each other via a "upstream" or a "downstream" dependency (here in particular a representation by a positive and/or a negative number can be used).

Determining nodes affected by the selected node may include determining affected components having inputs that are connected to the selected node and determining components having inputs connected to one or more affected components.

Determining nodes affecting the selected node may include determining affecting components having outputs that are connected to the selected node and determining components having outputs connected to one or more affecting components.

In some forms of the invention, displaying dependency data includes visually distinguishing between: nodes that are affected by the selected node and/or nodes that affect the selected node; and nodes that are neither affected by or affect the selected node.

In some forms of the invention, displaying dependency data includes visually distinguishing between nodes that are affected by the selected node and nodes that affect the selected node.

Visually distinguishing may comprises the use of different colours, although many alternative methods of distinguishing may be used.

The step of displaying dependency data may include a user selecting which of a number of display modes is used. The said modes may, for example, comprise two or more of: indicating the nodes that are affected by the selected node; indicating the nodes that affect the selected node; and indicating the nodes that both affect and are affected by the selected node.

It is further suggested to perform the method in a way that at least one node, in particular a selected node of the graphical program or data flow diagram, shows a plurality of dependencies with respect to nodes that are affected by the respective node and/or with respect to nodes that affect the respective node. In other words, the method can comprise a node that has a plurality of inputs and/or a plurality of outputs. This plurality of inputs and/or outputs or affected and/or affecting nodes can be particularly associated with nodes that are "directly connected" to the respective (selected) node (i.e. that the node is directly affecting a plurality of other nodes and/or is directly affected by a plurality of other nodes). A "direct" dependency exists in particular, if a direct line is established by two nodes of a graphical program or data flow diagram.

Another preferred embodiment of the method can be established if at least one node, in particular a selected node of the graphical program or data flow diagram comprises a feedback line. By a feedback line is typically meant that an output line of the respective node will be directly or indirectly transferred "back", so that it will "appear" again on the input side of the respective node (typically this will be the case in combination with at least an additional other input parameter and/or via at least one "node in between", although a direct feedback connection can be envisaged as well). Typically, a feedback will be done indirectly in a way that the output signal will be sent to a node that lies "upstream" of the selected node. I.e., an output of a first node that will give an input signal to a (at least) second node that is arranged "upstream" will be (typically partially) influenced by another input to the second node and/are another input to the first node (the same applies analogously if more nodes are involved). This way, there will be some "mixing" with other data and/or an interdependence of the data that is fed back with (a plurality of) other input data in a non-trivial (i.e. typically in a highly non-linear) way will be established.

### BRIEF DESCRIPTION OF THE DRAWINGS

The invention will now be described in further detail with reference to the following schematic drawings, in which:
Figure 1 is a flow chart showing an algorithm in accordance with an aspect of the present invention;
Figure 2 shows a section of graphical code displayed in accordance with an aspect of the present invention;
Figure 3 shows the section of graphical code of Figure 2 in which the elements of the code are greyed out;
Figure 4 shows a section of graphical code of Figure 2 displayed in accordance with an aspect of the present invention;
Figure 5 shows a section of graphical code of Figure 2 displayed in accordance with an aspect of the present invention;
Figure 6 shows a section of graphical code of Figure 2 displayed in accordance with an aspect of the present invention;
Figure 7 shows a section of graphical code of Figure 2 displayed in accordance with an aspect of the present invention;
Figure 8 shows a section of graphical code of Figure 2 displayed in accordance with an aspect of the present invention;
Figure 9 shows a further section of graphical code in accordance with an aspect of the present invention;
Figure 10 shows a section of graphical code of Figure 9 displayed in accordance with an aspect of the present invention;
Figure 11 shows a section of graphical code of Figure 9 displayed in accordance with an aspect of the present invention; and
Figure 12 shows a section of graphical code of Figure 9 displayed in accordance with an aspect of the present invention.

### DETAILED DESCRIPTION OF THE INVENTION

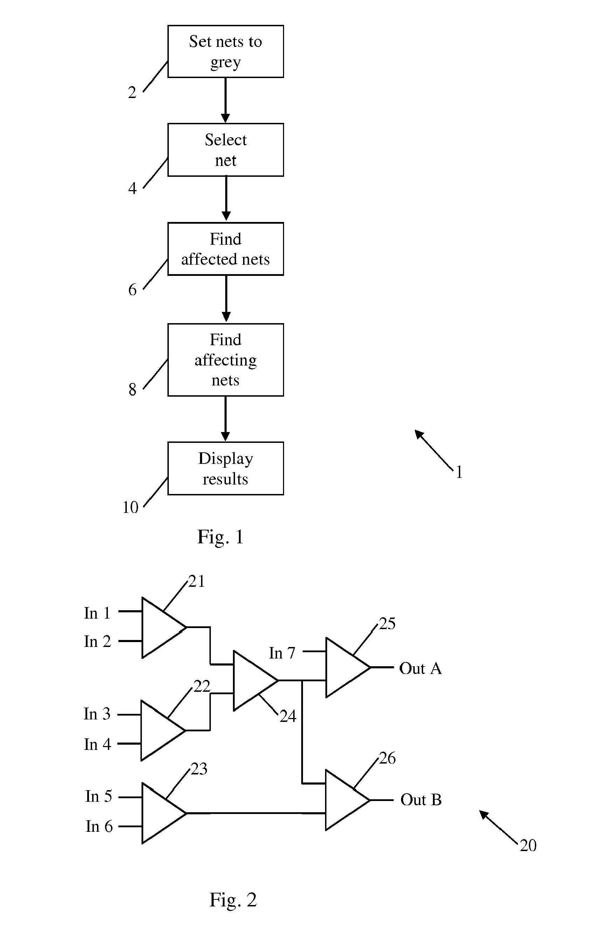

Figure 1 is a flow chart showing an algorithm, indicated generally by the reference numeral 1, in accordance with an aspect of the present invention.

The algorithm 1 starts at step 2, where a display of a graphical program sets all nets within the display to grey. Next, at step 4, a net is selected. The "net" is a node within the graphical program (the terms "net" and "node" are used interchangeably herein). In the display of the program, the selected net may be displayed using a colour other than grey.

The algorithm 1 moves to step 6, where all nets within the graphical code that are affected by the selected net are identified. Then, at step 8, all nodes that are affecting the selected net are identified.

Finally, at step 10, the results are displayed to the user.

The steps of the algorithm 1 are described in further detail below with reference to a number of exemplary displays of graphical code in accordance with the principles of the present invention.

Figure 2 shows a section of graphical code, indicated generally by the reference numeral 20, displayed in accordance with an aspect of the present invention. The graphical code 20 comprises first, second, third, fourth, fifth and sixth function blocks, indicated by the reference numerals 21 to 26 respectively. Each function block has two inputs and an output. Of course, in any real system, function blocks may have more or fewer inputs or outputs.

The first function block 21 has a first input IN1 and a second input IN2. The second function block 22 has a first input IN3 and a second input IN4. The third function block 23 has a first input IN5 and a second input IN6. The fourth function block 24 has a first input coupled to the output of the first function block 21 and a second input coupled to the output of the second function block 22. The fifth function block 25 has a first input IN7 and a second input coupled to the output of the fourth function block 24. The sixth function block 26 has a first input coupled of the output of the fourth function block 24 (and to the second input of the fifth function block 25) and a second input coupled to the output of the third function block 23. The output of the fifth function block 25 provides an output OUTA. The output of the sixth function block 26 provides an output OUTB.

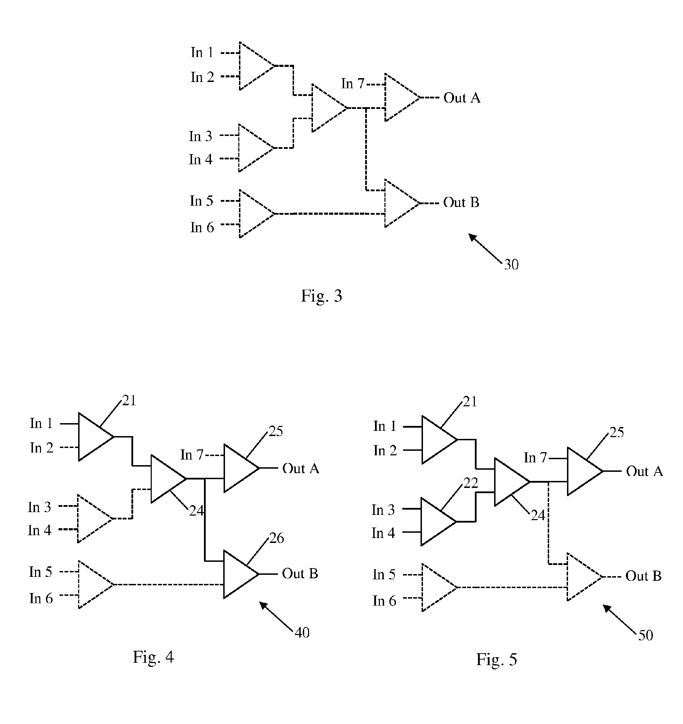

As described above, the algorithm 1 starts with the nets of the graphical code being set to grey (step 2 of the algorithm 1). Figure 3 shows the section of graphical code of Figure 2, indicated generally by the reference numeral 30, in which the elements of the code are greyed out (or in dotted form).

The next step of the algorithm 1 (step 4) is the selection of a net (or node) of the graphical code. Figure 4 shows a section of graphical code of Figure 2, indicated generally by the reference numeral 40, in which the input IN1 has been selected in the step 4.

With the input IN1 selected at step 4, the algorithm 1 moves to step 6 where the nets in the graphical code that are affected by the input IN1 are determined. Step 6 is implemented by finding all components having any of its inputs connected to the selected net (i.e. the input IN1). These components are "affected by" the input IN1. Next, all components having an input connected to a component that is affected by the input IN1 are identified and this process is repeated until all affected components are identified. In some embodiments of the invention, all components that are identified as being affected by the selected net are returned to the original colour (i.e. are no longer greyed out).

As shown in Figure 4, in the exemplary graphical code described above, the function blocks 21, 24, 25 and 26 are affected by the input IN1 and are shown in their original colour. Similarly, the first input of the fourth function block 24, the second input of the fifth function block 25 and the first input of the sixth function block 26 are affected by the input IN1 and are shown in their original colour. The other nets of the circuit 20 remain greyed out.

With the nets affected by the input IN1 identified (step 6), the algorithm 1 moves to step 8 are all nets affecting the selected net (the input IN1) are identified. Since IN1 is an input to the system, there are no nets in the graphical code that affect the input, so the step 8 returns no results.

The algorithm 1 then moves to step 10 where the results are displayed. The display shown in Figure 4 may be the output that is displayed at step 10.

Figure 5 shows an alternative example in which the output OUTA is selected at step 4 of the algorithm 1.

With the output OUTA selected, the algorithm 1 moves to step 6 where the affected nets are identified. The output OUTA is not used as an input to any node and so the step 6 returns no result.

The algorithm 1 then moves to step 8 where all nets affecting the output OUTA are identified. Step 8 is implemented by finding all components having any of its outputs connected to the selected net (i.e. the output OUTA). These components are "affecting" the output OUTA. Next, all components having an output connected to a component that is affecting the output OUTA are identified and this process is repeated until all affecting nets are identified. In some embodiments of the invention, all components that are identified as affecting the selected net are returned to the original colour (i.e. are no longer greyed out).

As shown in Figure 5, in the exemplary graphical code described above, the function blocks 21, 22, 24 and 25 are affecting the output OUTA and are shown in their original colour. Similarly, the first and second inputs of the first, second, fourth and fifth function blocks all affect the output OUTA and are therefore shown in their original colour. The other nets remain greyed out.

The algorithm 1 then moves to step 10 where the results are displayed. The display shown in Figure 5 may be the output that is displayed at step 10.

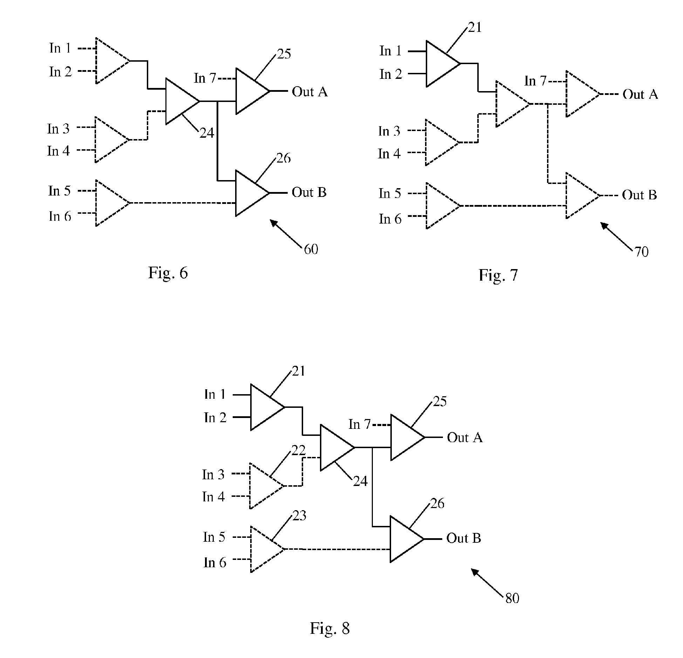

In the examples shown in Figures 4 and 5, the selected nets were either inputs or outputs to the system. Figure 6 shows a section of graphical code of Figure 2 in which the first input of the fourth function block 24 is selected in step 4 of the algorithm 1.

With the first input of the fourth function block 24 selected in step 4, the algorithm 1 moves to step 6 where the nets affected by the first input to the function block 24 are identified. Clearly, the function block 24 is itself affected. In turn, the function blocks 25 and 26 (which are connected to the output of the function block 24) are affected (as are the second input of the fifth function block 25 and the first input of the sixth function block 26). Further, the outputs OUTA and OUTB are both affected.

Figure 6 shows the exemplary graphical code of Figure 2, indicated generally by the reference numeral 60, in which the nets identified in step 6 are shown in their original colour and the remaining nets are greyed out.

The algorithm 1 then moves to step 8 where the nets affecting the selected net (the first input of the function block 24) are identified. Only the first function block 21 (as well as the two inputs of that function block) affects the first input of the function block 24 and so this net is shown in its original colour in the exemplary graphical code 70 of Figure 7.

As described above, the final step of the algorithm 1 comprises displaying the results. This step may include merging the results generated in the steps 6 and 8 described above.

Figure 8 shows a section of graphical code of Figure 2, indicated generally by the reference numeral 80, in which the nets that are either affecting, or are affected by the net selected in the step 4 are displayed in the original colour and the remaining nets are greyed out. Thus, the function blocks 21, 24, 25 and 26 are in their original colour and the function blocks 22 and 23 and the inputs and outputs of those function blocks (the inputs IN3, IN4, IN5 and IN6 and the second inputs to the fourth function block 24 and the sixth function block 26) are greyed out. The first input of the fifth function block 25 (IN7) is also greyed out as it neither affects nor is affected by the net selected in the step 4.

The results 10 shown in Figure 8 demonstrate, for example, that the second input to the sixth function block 26 is entirely independent of the first input of the fourth function block 24.

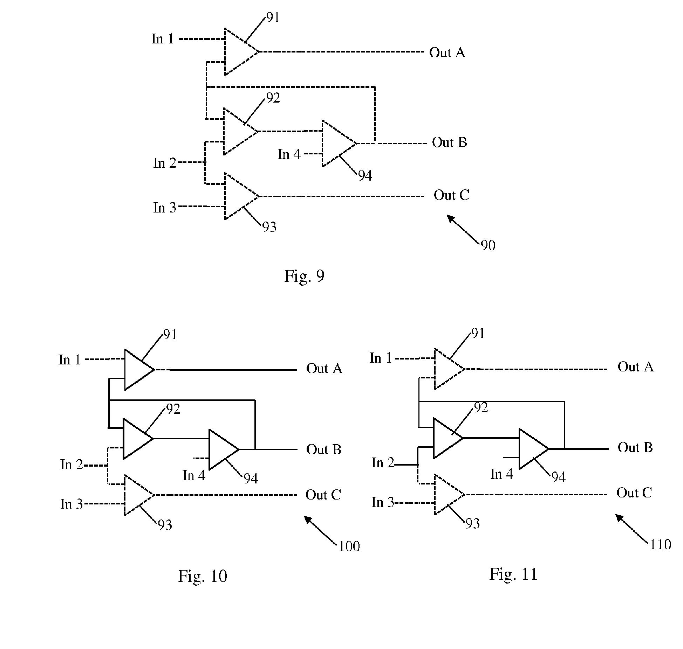

Figure 9 shows a further section of graphical code, indicated generally by the reference numeral 90, in accordance with an aspect of the present invention.

The graphical code 90 comprises first, second, third and fourth function blocks, indicated by the reference numerals 91 to 94 respectively. Each function block has two inputs and an output. Of course, in any real system, function blocks may have more or fewer inputs or outputs.

The first function block 91 has a first input IN1, a second input and a first output OUTA. The second function block 92 has a first input coupled to the second input of the first function block 91, a second input IN2 and an output. The third function block 93 has a first input IN2 (that is coupled to the second input of the second function block 92), a second input IN3 and an output OUTC. The fourth function block has a first input coupled to the output of the second function block 92, a second input IN4 and an output OUTB. The output of the fourth function block 94 is also coupled to the second input of the first function block 91 and the first input of the second function block 92.

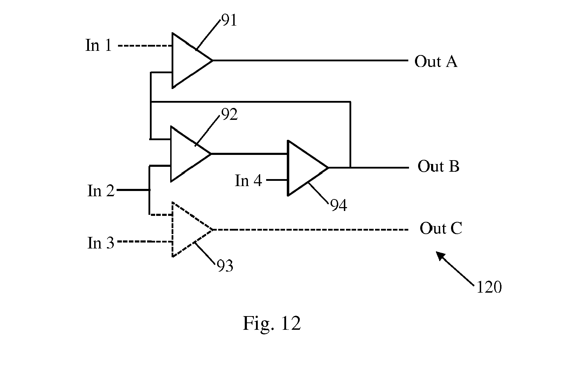

Assume that the output of the fourth function block 94 is the net selected at step 4 of the algorithm 1. As described in detail below, Figure 10 demonstrates the nets of the graphical code 90 that are affected by the selected node, Figure 11 shows the nets of the graphical code that affect the selected node and Figure 12 shows the nets of the graphical code that either affect or are affected by the selected node.

Figure 10 demonstrates the nets of the graphical code 90 that are affected by the selected node (indicated generally by the reference numeral 100). The selected net is connected to both the first and second function blocks 91 and 92 and so those function blocks (and their outputs, including the output OUTA) are affected. Further, the first input of the fourth function block 94 (and therefore the fourth function block and its output) are affected, including the output OUTB.

Figure 11 shows the nets of the graphical code that affect the selected node (indicated generally by the reference numeral 110). Clearly, the fourth function block 94 affects the selected node, as do the two inputs to that function block. The inputs to the fourth function block are provided by the output of the second function block 92 and the input IN4. The second function block 92 and its inputs (including the input IN2) therefore also affect the selected net.

Figure 12 shows the nets of the graphical code that either affect or are affected by the selected node (indicated generally by the reference numeral 120). Figure 12 shows that the inputs IN1 and IN3, the output OUTC and the third function block 93 are all independent of the output of the fourth function block 94.

The present invention provides a "dependency view". This is a method for selecting a net in graphical code and displaying the selected net together with other nets that are either affecting the selected signal, or are affected by that signal. The user can then navigate through the graphical program to find where there are signals, nodes or modules that are dependent in some way on the selected signal.

The dependency view function enables a developer to demonstrate that safety critical and non-safety critical functions of a program are independent of one another. The tool also enables dataflows within a graphical program to be followed and understood more easily.

The display of results in step 10 of the algorithm 1 can be provided in different ways. For example, it may be possible to filter the results to display only the nets that are affected by the selected net (see Figures 4, 6 and 10), to display only the nets are affect the selected net (see Figures 5, 7 and 11) or to display nodes that either affect or are affected by the selected net (see Figures 8 and 12).

In some forms of the invention, the nets that affect or are affected by the selected net may be distinguished in the displayed results. For example, a first colour may be used for nets that affect the selected net and a second colour may be used for nets that are affected by the selected net. A third colour may be used for nets that are both affected by and affect the selected net. The selected net itself may be identified, for example by using a further colour or by some other visual effect (such as flashing).

The embodiments of the invention described above are provided by way of example only. The skilled person will be aware of many modifications, changes and substitutions that could be made without departing from the scope of the present invention. For example, although the invention has generally been described with reference to graphical programs, other applications such as data flow diagrams (which might be defined as graphical representations of the flow of data through a system) are possible and fall within the scope of the invention. The claims of the present invention are intended to cover all such modifications, changes and substitutions as fall within the spirit and scope of the invention.

## Claims

1. A method of indicating dependency in a graphical program or a dataflow diagram, the method comprising:
determining nodes that are affected by a selected node of the graphical program or dataflow diagram;
determining nodes that affect the selected node; and
displaying dependency data relating to the selected node by indicating the nodes that are affected by the selected node and/or the nodes that affect the selected node.

2. A method as claimed in claim 1, wherein determining nodes affected by the selected node includes determining affected components having inputs that are connected to the selected node and determining components having inputs connected to one or more affected components.

3. A method as claimed in claim 1 or claim 2, wherein determining nodes that affect the selected node includes determining affecting components having outputs that are connected to the selected node and determining components having outputs connected to one or more affecting components.

4. A method as claimed in any one of claims 1 to 3, wherein displaying dependency data includes visually distinguishing between:
nodes that are affected by the selected node and/or nodes that affect the selected node; and
nodes that are neither affected by or affect the selected node.

5. A method as claimed in any preceding claim, wherein displaying dependency data includes visually distinguishing between nodes that are affected by the selected node and nodes that affect the selected node.

6. A method as claimed in claim 4 or claim 5, wherein visually distinguishing comprises the use of different colours.

7. A method as claimed in any preceding claim, the step of displaying dependency data includes a user selecting which of a number of display modes is used.

8. A method as claimed in claim 7, wherein said modes comprise two or more of:
indicating the nodes that are affected by the selected node;
indicating the nodes that affect the selected node; and
indicating the nodes that both affect and are affected by the selected node.

9. A method as claimed in any preceding claim, wherein at least one node, in particular a selected node of the graphical program or data flow diagram shows a plurality of dependencies with respect to nodes that are affected by the respective node and/or with respect to nodes that affect the respective node.

10. A method as claimed in any preceding claim, wherein at least one node, in particular a selected node of the graphical program or data flow diagram comprises a feedback line.

11. An apparatus adapted to:
determine nodes that are affected by a selected node of a graphical program or a dataflow diagram;
determine nodes that affect the selected node; and
display dependency data relating to the selected node by indicating the nodes that are affected by the selected node and/or the nodes that affect the selected node.

12. A computer program product comprising:
means for determining nodes that are affected by a selected node of a graphical program or a dataflow diagram;
means for determining nodes that affect the selected node; and
means for displaying dependency data relating to the selected node by indicating the nodes that are affected by the selected node and/or the nodes that affect the selected node.
